# FASCICULE DE BREVET EUROPEEN

(11) **EP 4 558 944 B1**
(45) Date de publication et mention de la délivrance du brevet: **06.05.2026**
(21) Numéro de dépôt: 23733656.5
(22) Date de dépôt: 12.06.2023
(51) Int. Cl.: G06Q 50/43, G06Q 10/0631, G06Q 10/08

(54) **PROCÉDÉ POUR TRANSPORTER UN CONDUCTEUR DE VÉHICULE À DÉPOSER UTILISANT UN VÉHICULE AUTONOME**
TRANSPORTVERFAHREN MITTES EINES AUTONOMEN FAHRZEUGS FÜR DEN FAHRER EINES ZU DEPONIERENDEN FAHRZEUGS
METHOD FOR TRANSPORTING A DRIVER OF A VEHICLE TO BE DEPOSITED USING AN AUTONOMOUS VEHICLE

(30) Priorité: 19.07.2022 FR 2207381
(43) Date de publication de la demande: 28.05.2025
(73) Titulaire: Renault s.a.s, 92100 Boulogne Billancourt (FR)
(72) Inventeur: MILANES, Vicente, 46007 Valladolid (ES)
(86) Numéro de dépôt international: PCT/EP2023/065685
(87) Numéro de publication internationale: WO 2024/017540

(56) Documents cités:
- US-A1- 2015 134 178
- US-A1- 2020 207 338
- MILANE S V ET AL: "Cooperative Maneuvering in Close Environments Among Cybercars and Dual-Mode Cars", IEEE TRANSACTIONS ON INTELLIGENT TRANSPORTATION SYSTEMS, IEEE, PISCATAWAY, NJ, USA, vol. 12, no. 1, 1 March 2011 (2011-03-01), pages 15 - 24, XP011513052, ISSN: 1524-9050, DOI: 10.1109/TITS.2010.2050060

## Description

La présente invention concerne un procédé pour transporter un conducteur jusqu'à une station de prise en charge après qu'il ait déposé un véhicule à un endroit déterminé.

Il est connu de proposer des services de voiturier chargé de garer un véhicule, par exemple le véhicule d'un client d'un hôtel ou d'un restaurant. Des systèmes de service de voiturier automatisé ont été proposés.

On connaît par exemple par la demande de brevet US2020/0207338, un procédé pour effectuer un service de voiturier automatisé permettant à un véhicule de transport (sans pilote) de se déplacer et de se garer de manière autonome sur une place de stationnement vide en communiquant avec une infrastructure de stationnement. Il permet aussi à un véhicule de transport (sans pilote) de se déplacer de manière autonome d'une place de stationnement à une zone de prise en charge en communiquant avec une infrastructure de stationnement.

Cette demande de brevet traite plus particulièrement de la gestion des obstacles pouvant se trouver sur la trajectoire du véhicule de transport.

Le procédé de voiturier automatisé comprend notamment la détermination d'une première position cible et d'un premier itinéraire de guidage à l'aide d'une carte préchargée, et la détection d'un obstacle à partir de données provenant de capteurs, et dans lequel une infrastructure met à jour la carte sur la base de l'obstacle détecté pour générer une carte mise à jour.

Par ailleurs, dans le cas de la gestion logistique de matériels roulants sortant d'une ligne de production d'une usine de fabrication, en particulier de véhicules automobiles pour particuliers tels que voitures ou pour professionnels tels que camions, autocars, il est usuel de stocker ces véhicules en les amenant depuis un lieu de prise en charge vers une place de dépose dans l'enceinte de l'usine de fabrication, souvent sur de vastes parkings, par exemple offrant 10 000 places de stationnement.

Le plus souvent une équipe de conducteurs, appelés aussi couramment « jockeys », prend en charge les véhicules à déposer, un par conducteur, pour le conduire à une place de dépose déterminée. Il est alors nécessaire de ramener l'équipe de conducteurs, une fois que chaque conducteur a déposé son véhicule. A cette fin, un véhicule de transport avec chauffeur vient récupérer chaque conducteur à la place de dépose du véhicule dont il était en charge, et une fois tous les conducteurs montés dans le véhicule de transport, le chauffeur revient avec eux à la station de prise en charge, afin qu'à nouveau les conducteurs prennent en charge d'autres véhicules à déposer, et ainsi de suite.

Pour récupérer les conducteurs sur le parking, le véhicule de transport avec chauffeur doit aller de place de dépose en place de dépose, les places pouvant être éloignées les unes des autres, attendre le cas échéant qu'un conducteur ait déposé son véhicule, ce qui peut prendre du temps et nécessite un suivi des places de dépose par le chauffeur du véhicule de transport. Une telle opération de transport de conducteurs peut être répétée 200 fois par jour, ce qui représente une consommation de temps relativement importante.

L'invention vise à résoudre les inconvénients de l'art antérieur. Elle vise en particulier à faciliter le transport d'un conducteur de véhicule, une fois le véhicule déposé, vers un lieu déterminé telle qu'une station de prise en charge de véhicules à déposer. Elle vise en particulier aussi à faciliter le transport d'une pluralité de conducteurs de véhicule, une fois leur véhicule déposé, vers la station de prise en charge de véhicules à déposer.

A cet effet, la présente invention propose un procédé pour transporter un conducteur, jusqu'à une station de prise en charge de véhicules à déposer, après que ledit conducteur ait déposé un véhicule à une place de dépose prédéterminée parmi un lot de places de dépose. Selon l'invention, ledit procédé comprend l'utilisation d'au moins un véhicule de transport apte à naviguer dans un mode de conduite autonome, ledit véhicule de transport comprenant une carte numérique préchargée d'au moins un domaine opérationnel délimité pré-établi. Ledit domaine opérationnel délimité inclut au moins ladite station de prise en charge, ladite place de dépose prédéterminée, et au moins des voies de circulation entre la station de prise en charge et ladite place de dépose prédéterminée.

Selon l'invention, ledit procédé comprend en outre les étapes suivantes :
- A) Etablir un itinéraire de guidage du véhicule de transport depuis la station de prise en charge de véhicules à déposer vers la place de dépose prédéterminée en fournissant à un module générateur d'itinéraire :
   - les coordonnées; sur ladite carte numérique, de la place de dépose prédéterminée,
   - les coordonnées et le cap dudit véhicule de transport sur ladite carte numérique,
   puis générer les paramètres de l'itinéraire de guidage par un algorithme d'exploration aléatoire que comprend ledit module générateur d'itinéraire , sous forme d'un ensemble de points sur une distance de visée choisie entre 30 et 70 mètres, comprenant les coordonnées du véhicule, le cap du véhicule, la courbure de la trajectoire d'itinéraire, la vitesse du véhicule, l'accélération du véhicule ; puis
- B) Fournir lesdits paramètres de l'itinéraire de guidage à un module de gestion d'obstacles ;
- C) Détecter les obstacles présents sur ledit itinéraire de guidage, et en cas de détection d'au moins un obstacle, fournir les coordonnées dudit obstacle sur ladite carte numérique audit module de gestion d'obstacles, de sorte que ce dernier génère des instructions aptes à modifier des paramètres de l'itinéraire de guidage, notamment la vitesse et/ou l'accélération du véhicule de transport ;
- D) Envoyer les données relatives à l'itinéraire de guidage depuis le module de gestion d'obstacles, vers le module de commande du véhicule qui convertit ces données en commandes,
- E) Envoyer les commandes générées par ledit module de commande vers les actionneurs du véhicule de transport pour activer ces derniers.

De préférence à l'étape A), le module générateur d'itinéraire génère les paramètres de l'itinéraire de guidage sous forme d'un ensemble de points sur une distance de visée choisie entre 40 et 60 mètres.

De préférence à l'étape A), la génération des paramètres de l'itinéraire de guidage par le module générateur d'itinéraire comprend une première génération de paramètres par un algorithme d'exploration aléatoire de type « arbre aléatoire à exploration rapide », connu aussi sous l'acronyme anglais « RRT », que comprend ledit module générateur d'itinéraire , puis une optimisation de ces paramètres de première génération par un lissage par approche polynômiale, afin de générer les paramètres de l'itinéraire de guidage sous forme dudit ensemble de points sur une distance de visée choisie entre 30 et 70 mètres (en particulier entre 40 et 60 mètres), comprenant les coordonnées du véhicule, le cap du véhicule, la courbure de la trajectoire d'itinéraire, la vitesse du véhicule, et l'accélération du véhicule.

En particulier ledit procédé comprend à l'étape C) : générer une instruction de stopper le véhicule de transport en cas de détection d'obstacle selon une consigne que comprend ledit module de gestion d'obstacles, pour éviter une collision avec un obstacle.

En particulier ledit procédé comprend une étape de donner l'instruction audit véhicule de transport en mode de conduite autonome de s'arrêter à proximité de ladite place de dépose prédéterminée, afin que le conducteur puisse monter dans ledit véhicule de transport une fois que ledit conducteur a déposé un véhicule à ladite place de dépose prédéterminée.

En particulier ledit procédé peut comprendre l'étape :
- Activer le mode de conduite autonome dudit véhicule de transport au départ dudit véhicule vers ladite place de dépose prédéterminée, en particulier par une commande à distance.

En particulier ledit procédé peut comprendre une étape :
- Activer un mode de conduite manuelle dudit véhicule de transport une fois arrêté à proximité de ladite place de dépose prédéterminée, ledit véhicule de transport pouvant passer ainsi sous la conduite d'un conducteur, en particulier jusqu'à ladite station de prise en charge.

En particulier ledit mode de conduite manuelle est activé par désactivation du mode de conduite autonome, et en particulier par une commande à distance.

L'invention a aussi pour objet un procédé pour transporter au moins un premier conducteur parmi une pluralité de conducteurs, chaque conducteur ayant à déposer un véhicule respectivement sur une place de dépose prédéterminée parmi un lot de places de stationnement. Ledit procédé comprend l'utilisation d'un véhicule de transport apte à naviguer dans un mode autonome, ledit véhicule de transport comprenant une carte numérique préchargée d'au moins un domaine opérationnel délimité pré-établi. Ledit domaine opérationnel délimité inclut au moins ladite station de prise en charge, une aire de stationnement comprenant ledit lot de places de stationnement, et au moins des voies de circulation entre la station de prise en charge et ladite aire de stationnement.

Ledit procédé pour transporter au moins un premier conducteur parmi une pluralité de conducteurs comprend les étapes :
- Numériser ledit lot de places de stationnement à partir d'informations fournies par la carte numérique à un module de placement du stationnement,
- Attribuer une position numérique à chaque place dudit lot de places de stationnement par ledit module de placement,
- Assigner une place de dépose à chacun des véhicules à déposer par la pluralité de conducteurs, par ledit module de placement du stationnement, de sorte que lesdits conducteurs devront aller chacun à la place de dépose assignée à leur véhicule respectif, et dans le temps le plus court dont le véhicule de transport aura besoin pour parcourir la distance requise jusqu'aux dites places de dépose,
- Déterminer une place de dépose constituant, parmi l'ensemble des places de dépose assignées aux véhicules à prendre en charge par ladite pluralité de conducteurs, la première place de dépose d'un premier véhicule à déposer conduit par un premier conducteur, où se rendra le véhicule de transport pour assurer le transport dudit premier conducteur une fois que ledit premier conducteur aura déposé ledit premier véhicule.

Ledit procédé pour transporter au moins un premier conducteur parmi une pluralité de conducteurs comprend au moins l'une des étapes décrites précédemment, notamment les étapes A) à E), pour le procédé pour transporter un conducteur jusqu'à une station de prise en charge de véhicules à déposer, après que ledit conducteur ait déposé un véhicule à une place de dépose prédéterminée parmi un lot de places de dépose, le conducteur étant ledit premier conducteur, et la place de dépose prédéterminée étant ladite première place de dépose.

Ledit procédé pour transporter au moins un premier conducteur parmi une pluralité de conducteurs peut comprendre aussi au moins l'une des étapes suivantes :
- Activer le mode de conduite autonome dudit véhicule de transport au départ dudit véhicule de transport vers ladite première place de dépose prédéterminée, en particulier par une commande à distance,
- Activer le mode de conduite manuelle dudit véhicule de transport une fois arrêté à proximité de ladite première place de dépose prédéterminée, et en particulier par une commande à distance, ledit véhicule de transport pouvant passer ainsi sous la conduite dudit premier conducteur.

Selon un mode de réalisation particulier, le procédé pour transporter au moins un premier conducteur parmi une pluralité de conducteurs, comprend les étapes :
- passer le véhicule de transport dans un mode de conduite manuelle sous la conduite dudit premier conducteur ayant déposé son véhicule à déposer, par exemple en activant le mode de conduite manuelle dudit véhicule de transport une fois arrêté à proximité de ladite première place de dépose prédéterminée, en particulier par une commande à distance, puis
- aller aux places de dépose respectivement assignées aux autres véhicules à déposer par les autres conducteurs de ladite pluralité de conducteurs, suivant un ordre indiqué par le module de placement du stationnement afin de récupérer lesdits autres conducteurs après qu'ils aient déposé leur véhicule à déposer respectif, puis
- ramener la pluralité de conducteurs à ladite station de prise en charge.

L'invention a aussi pour objet une utilisation du procédé pour transporter au moins un premier conducteur parmi une pluralité de conducteurs, pour la gestion du flux logistique de stockage de produits roulants motorisés en sortie d'une usine de fabrication, notamment de véhicules automobiles en sortie d'une chaîne de fabrication, sur des aires de stationnement dans l'enceinte de l'usine de fabrication, des équipes de conducteurs étant en charge d'acheminer lesdits produits vers des places de dépose, ledit procédé étant appliqué à chaque équipe constituant une pluralité de conducteurs.

L'invention a également pour objet un système de gestion du transport d'au moins un conducteur d'un véhicule, ledit conducteur partant et revenant à un même lieu déterminé tel qu'une station de prise en charge de véhicules à déposer, après que ledit conducteur ait déposé ledit véhicule à une place de dépose prédéterminée parmi un lot de places de dépose, ledit système de gestion comprenant :
- au moins un véhicule de transport apte à naviguer dans un mode de conduite autonome et comprenant une carte numérique d'un domaine opérationnel délimité pré-établi ,
- un module de placement du stationnement configuré pour attribuer les coordonnées sur ladite carte numérique, d'un lot de places de dépose , et pour déterminer ladite place de dépose prédéterminée parmi ledit lot de places de dépose,
- un module de positionnement d'un véhicule configuré pour générer les coordonnées dudit véhicule de transport et le cap du véhicule de transport sur ladite carte numérique,
- un module générateur d'itinéraire configuré pour communiquer avec ledit module de placement du stationnement et ledit module de positionnement d'un véhicule, et pour générer les paramètres d'un itinéraire de guidage du véhicule de transport vers au moins ladite place de dépose prédéterminée,
- un module de gestion d'obstacles configuré pour communiquer avec ledit module générateur d'itinéraire et un module de détection d'obstacles, et avec un module de commande du véhicule, pour générer des instructions de modification de paramètres de l'itinéraire de guidage en cas de détection d'obstacle,
notamment la vitesse et/ou l'accélération du véhicule de transport, et envoyer les paramètres de l'itinéraire de guidage et lesdites instructions de modifications de paramètres au module de commande du véhicule.

De préférence ledit module générateur d'itinéraire dudit système de gestion comprend un algorithme d'exploration aléatoire de type « arbre aléatoire à exploration rapide » (connu aussi sous l'acronyme anglais « RRT »), et un lissage de forme polynômiale, afin de générer les paramètres de l'itinéraire de guidage sous forme d'un ensemble de points sur une distance de visée donnée.

En particulier ledit système de gestion du transport d'au moins un conducteur d'un véhicule à déposer, est configuré pour mettre en œuvre un procédé pour transporter un conducteur d'un véhicule ou un procédé pour transporter au moins un premier conducteur parmi une pluralité de conducteur tels que décrits précédemment.

L'invention a également pour objet un programme informatique comprenant les instructions pour exécuter les étapes d'un procédé de transport selon l'invention, lorsque lesdites instructions sont exécutées par un ou plusieurs processeurs.

L'invention a encore pour objet un support lisible par ordinateur sur lequel est stocké le programme informatique de l'invention.

Par "Support lisible par ordinateur" on entend toute mémoire, tout dispositif de stockage, tout mécanisme de stockage et tout autre mécanisme de stockage et de signalisation, y compris les interfaces et les dispositifs tels que les cartes d'interface réseau et les mémoires tampons qui s'y trouvent, ainsi que tout dispositif de communication et tout signal reçu et transmis, et toute autre technologie actuelle et évolutive qu'un système informatisé peut interpréter, recevoir et/ou transmettre. Ce concept comprend non seulement un support lisible par ordinateur tel qu'un disque dur connecté à une unité centrale et avec lequel le programme enregistré est directement exécuté, mais aussi tout autre support lisible par ordinateur qui enregistre un programme à exécuter après l'avoir installé sur un disque dur. Un programme comprend ici non seulement un programme qui peut être exécuté directement, mais aussi un programme au format source, un programme compressé et un programme chiffré.

D'autres particularités et avantages de l'invention ressortiront à la lecture de la description faite ci-après d'un mode de réalisation particulier de l'invention, donné à titre indicatif mais non limitatif, en référence au dessin unique annexé.

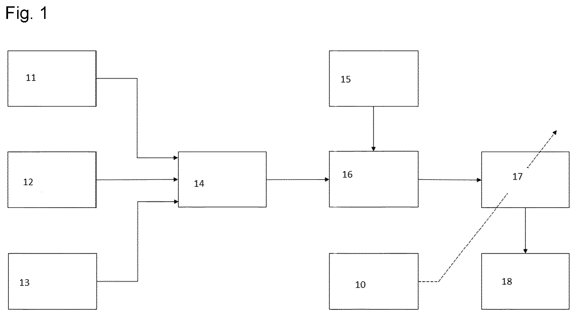

[Fig. 1] représente un diagramme de l'agencement du système de gestion de transport relatif au procédé de transport selon un mode de réalisation de l'invention.

L'invention est ici décrite de manière détaillée dans le cadre d'une application à la gestion du flux logistique de stockage de véhicules en sortie d'une usine de fabrication de véhicules automobiles.

En sortie de la chaîne de fabrication, certains véhicules qui viennent d'être fabriqués sont déposés selon l'exemple sur de vastes parkings, par exemple de 10 000 places, à des fins de stockage temporaire dans l'enceinte de l'usine.

Les véhicules sortant de la chaîne de fabrication arrivent à une station de prise en charge, pour être pris en charge en tant que véhicules à déposer par une équipe de conducteurs (« jockeys »).

L'équipe comprend par exemple quatre conducteurs, chaque conducteur devant conduire un véhicule à déposer, depuis une station de prise en charge commune vers une place de dépose prédéterminée, puis revenir à la station de prise en charge pour conduire de nouveaux véhicules à déposer, et ainsi de suite.

Le procédé de transport des conducteurs pour les ramener à la station de prise en charge va être décrite selon un mode de réalisation conforme à l'invention, et en référence à [Fig. 1].

En référence à [Fig. 1], le procédé est basé sur un système comprenant trois modules d'entrées de données numériques 11, 12, 13 qui vont alimenter un module générateur d'itinéraire 14 pour établir un itinéraire de guidage du véhicule de transport.

Un véhicule électrique autonome, apte à fonctionner dans un mode de conduite autonome et dans un mode de conduite manuelle, est utilisé pour ramener les conducteurs à ladite station de prise en charge, une fois que ces conducteurs ont déposé lesdits véhicules à déposer aux places de dépose respectives.

A cet effet le véhicule de transport passe prendre chaque conducteur à proximité de la place de dépose respective du véhicule dont il a la charge.

Au préalable, un domaine opérationnel délimité est établi et une carte numérique détaillée est établie pour ce domaine opérationnel. Selon l'exemple, ce domaine opérationnel délimité s'étend sur un espace couvrant la station de prise en charge des véhicules à déposer, le parking, et les voies de circulation afférentes. Cette carte numérique 11 constitue un des modules numériques.

L'établissement de la carte numérique est basé sur des informations de précisions centimétriques relative au domaine opérationnel délimité, provenant d'un système de géolocalisation mondial (couramment connu sous son acronyme anglophone « GPS » pour « Global Positioning System ») de haute précision, et de capteurs embarqués sur un véhicule (LIDAR, caméras).

La carte numérique 11 relative au domaine opérationnel délimité est préchargée dans une mémoire du véhicule de transport. Ladite carte 11 peut utiliser des coordonnées mondiales ou locales. Selon l'exemple les coordonnées sont des coordonnées locales dont le point d'origine est localisé proche de l'usine de fabrication. La carte répertorie notamment les voies de navigation sur le domaine opérationnel, l'entrée du parking, les sorties, les priorités routières, les possibilités de tourner.

Outre la carte numérique 11 préchargée décrite précédemment, les autres modules sont d'une part le module de positionnement 12 du véhicule de transport, et d'autre part le module de placement du stationnement 13, appelé aussi ici le module de placement du parking.

Le module de positionnement 12 permet de localiser le véhicule de transport sur ladite carte numérique 11, et de manière précise. Il peut être composé d'un seul système ou de plusieurs systèmes de positionnement combinés entre eux au sein du module. Selon l'exemple, il est basé sur un système de positionnement global différentiel de haute précision connu en soi tel que le système utilisant la cinématique temps réel, dite « RTK » (acronyme de l'équivalent anglais « Real Time Kinematic »), qui peut fournir des mesures avec une précision de 2cm. Ce dernier peut être combiné avec un système de localisation et de cartographie simultanées, dit « SLAM » (acronyme anglais de « Simultaneous Localisation and Mapping »), connu en soi, afin d'améliorer la carte de l'environnement du véhicule et de s'y localiser, et ainsi pour une meilleure fiabilité et robustesse du système.

Le module de positionnement 12 fournit la position du véhicule de transport en coordonnées X,Y , dites les coordonnées du véhicule de transport, et le cap (l'orientation) du véhicule de transport, sur la carte numérique.

Le module de placement du parking 13 a permis de numériser l'aire du parking, grâce notamment à partir d'informations détaillées fournies par la carte numérique. Ledit module de placement 13 assigne une position numérique à chaque place de parking. Ledit module de placement inclut aussi la gestion de la destination finale des nouveaux véhicules produits, en sortie de la chaîne de fabrication, en leur assignant leur place de dépose, places où les conducteurs devront aller chacun dans le temps le plus court dont le véhicule de transport aura besoin pour parcourir la distance requise jusqu'aux places de dépose et les destinations finales de tous les conducteurs d'une équipe donnée. Autrement dit, une fois que chaque véhicule a une place de dépose assignée, chaque jockey doit conduire son véhicule jusqu'à la place qui lui a été assignée et, dans le même temps, ledit premier conducteur qui conduit le véhicule de transport pour aller récupérer les autres jockeys, effectue un parcours optimisé pour les récupérer tous en un minimum de temps possible.

A partir des données provenant desdits trois modules 11, 12, 13, le module générateur d'itinéraire 14 fournit un itinéraire de guidage pour le véhicule de transport.

Les coordonnées (X, Y) et l'orientation (le cap) du véhicule de transport fournies par le module de positionnement 12 sont utilisées pour établir le trajet souhaité pour amener le véhicule de transport à sa première destination sur le parking, en établissant pour ladite première destination sur le parking, les coordonnées finales et l'orientation du véhicule de transport.

A cette fin, le module générateur d'itinéraire 14 utilise un algorithme de planification de mouvement basé sur une méthode effectuant une recherche aléatoire dans l'environnement, jusqu'à trouver la configuration finale désirée. Selon l'exemple le générateur d'itinéraire 14 utilise un algorithme exploratoire aléatoire de type connu sous le vocable anglais « rapidly-exploring random tree » (signifiant « arbre aléatoire à exploration rapide ») ou sous son acronyme correspondant « RRT », qui permet d'optimiser le trajet depuis le point de départ du véhicule, c'est-à-dire la station de prise en charge, jusqu'à la première destination, c'est-à-dire la première place de dépose sur le parking.

Ledit algorithme RRT est lissé en utilisant une approche polynômiale pour minimiser la courbure de trajectoire et fournir un planning de trajet à court terme pour le véhicule de transport, c'est-à-dire fournir les conditions de trajet sur une courte distance de visée.

L'algorithme exploratoire aléatoire donne en effet juste quelques segments rectilignes qui sont capables de pré-calculer l'itinéraire complet. Ce faible nombre de segments, par exemple 2 à 4 segments, fait perdre de la résolution et de la continuité d'un segment à l'autre, un planificateur local va ensuite, et si la distance de visée est courte, transformer ces quelques segments rectilignes de trajectoire en une fonction polynômiale adaptée qui fournit une continuité plus lisse et plus importante pour générer l'itinéraire.

Un ensemble de points de trajet incluant les paramètres suivants :
coordonnées (X, Y) du véhicule, cap du véhicule, courbure de la trajectoire, vitesse du véhicule, accélération du véhicule, pour fournir les conditions de trajet sur une distance de visée, dite aussi distance d'horizon, de 50 mètres.

Le mode pour générer l'itinéraire de guidage par le générateur d'itinéraire 14 ne prend pas en compte la présence d'obstacle(s) non répertorié(s) préalablement sur la carte numérique, car l'environnement de l'itinéraire concerne un domaine opérationnel délimité pré-établi et relativement constant, donc relativement sûr d'un point de vue de la sécurité routière.

Par exemple, il peut être établi des vitesses maximales de trajet, en estimant qu'au maximum 20 objets /heure pourraient interagir, et que la moyenne est de 11 objets /heure.

Prévoir un trajet avec une distance d'horizon de 50 mètres peut être suffisant. En effet on peut privilégier une voie dédiée entre la station de prise en charge jusqu'à l'entrée du parking, la vitesse du véhicule de transport pouvant être au maximum de 40 km/h par exemple, et une fois sur les voies de circulation du parking, la vitesse du véhicule de transport peut être au maximum de 20 km/h par exemple, et prévoir que le véhicule de transport est prioritaire au croisement de voies de circulation.

Il est néanmoins prévu de pouvoir agir au cours de l'itinéraire par l'intermédiaire d'un module de gestion d'obstacles 16 comme expliqué ci-après.

Pour gérer les obstacles environnants pouvant être présents sur l'itinéraire de guidage, le système comprend un module de gestion d'obstacles 16 alimenté en données par ledit générateur d'itinéraire 14 et par un module de détection d'obstacles environnants 15. Ledit module de détection d'obstacles environnants 15 comporte des capteurs (par exemple : caméras, lidar, radar, dispositif à ultrasons), permettant de détecter les obstacles pouvant interférer avec ledit itinéraire de guidage. Ledit module de gestion d'obstacles 16 comporte des moyens permettant de positionner les obstacles ainsi détectés sur la carte numérique 11 préchargée et de gérer de manière sécuritaire appropriée chaque obstacle détecté. A cette fin, ledit module de gestion d'obstacles 16 est apte à modifier les profils de vitesse et d'accélération qui ont été préalablement attribués au véhicule de transport par le module générateur d'itinéraire 14, de sorte qu'en cas de détection d'obstacle, il est apte à générer des instructions de modification de vitesse et d'accélération dudit véhicule de transport.

En particulier ledit module de gestion d'obstacles 16 peut avoir pour consigne de stopper le véhicule de transport pour éviter une collision avec un obstacle détecté au cours du déplacement réel du véhicule de transport.

L'itinéraire de guidage est ainsi affiné en sortie du module de gestion d'obstacles 16 pour fournir l'itinéraire de guidage cible au module de commande du véhicule de transport 17, afin que ce dernier 17 génère les commandes de contrôle des actionneurs 18 du véhicule de transport en fonction notamment de la vitesse cible pour le véhicule de transport et de l'orientation du véhicule.

Le module de commande du véhicule de transport 17 est aussi contrôlé par le module de gestion des modes de conduite 10 du véhicule de transport qui permet l'activation ou la désactivation des modes de conduite autonome ou de conduite manuelle.

Ce dernier module 10 peut comprendre une commande physique telle qu'un bouton de commande, ou une commande à distance telle qu'une application permettant l'activation/la désactivation du mode de conduite autonome afin de passer d'un mode de conduite autonome quand le véhicule parcourt sans passager l'itinéraire de guidage cible de la station de prise en charge vers le parking, jusqu'à la première place de dépose prédéterminée, à un mode de conduite manuelle une fois que le premier conducteur, après avoir déposé le véhicule automobile dont il était en charge à ladite première place de dépose, est installé dans le véhicule de transport et prend le volant dudit véhicule de transport pour procéder au ramassage des autres conducteurs de l'équipe aux places de dépose respectives des autres véhicules pris en charge ainsi déposés, et revenir à la station de prise en charge.

Par exemple, ledit premier conducteur peut ainsi, une fois qu'il a déposé ledit premier véhicule à déposer, et une fois installé dans le véhicule de transport, passer le véhicule de transport dans un mode de conduite manuelle pour aller récupérer les autres conducteurs de la pluralité de conducteur aux autres places de dépose assignées suivant un ordre indiqué par le module de placement du stationnement puis ramener lesdits conducteurs à ladite station de prise en charge.

En mode autonome, le véhicule de transport étant sans passager, il n'est pas nécessaire de prendre en compte le confort des passagers à bord, de sorte que des paramètres appliqués au véhicule tels que l'accélération, le freinage, le fait de tourner, ne sont pas limités par des facteurs de bonne acceptance. Il est ainsi possible de prioriser le temps de trajet par exemple, ce qui simplifie la gestion logistique des véhicules à déposer.

Le procédé de transport selon l'invention est mis en œuvre au moyen d'un système de gestion du transport d'au moins un conducteur qui comprend l'ensemble des modules décrits précédemment en lien avec la figure 1.

Ce système de gestion comprend typiquement un ou plusieurs processeurs (par exemple un microprocesseur, un microcontrôleur ou autre), notamment programmés pour mettre en œuvre le procédé selon l'invention. Il peut également comprendre des moyens de communication, optionnellement bidirectionnels. Le ou les processeurs peuvent comporter des moyens de stockage qui peuvent être une mémoire vive (RAM), une mémoire morte programmable effaçable électriquement (EEPROM), une mémoire flash, une mémoire externe ou autre. Ces moyens de stockage peuvent, entre autres, stocker des données reçues, un modèle de contrôle, une ou plusieurs cartographies et un ou plusieurs programmes informatiques.

## Revendications

1. Procédé pour transporter un conducteur jusqu'à une station de prise en charge de véhicules à déposer, après que ledit conducteur ait déposé un véhicule à une place de dépose prédéterminée parmi un lot de places de dépose, ledit procédé comprenant l'utilisation d'au moins un véhicule de transport apte à naviguer dans un mode de conduite autonome, ledit véhicule de transport comprenant une carte numérique (11) préchargée d'au moins un domaine opérationnel pré-établi incluant au moins ladite station de prise en charge, ladite place de dépose prédéterminée et au moins des voies de circulation entre la station de prise en charge et ladite place de dépose, ledit procédé comprenant les étapes suivantes :
- A) Etablir un itinéraire de guidage du véhicule de transport depuis la station de prise en charge de véhicules à déposer vers la place de dépose prédéterminée en fournissant à un module générateur d'itinéraire (14) :
- les coordonnées, sur ladite carte numérique (11), de la place de dépose prédéterminée,
- les coordonnées et le cap dudit véhicule de transport sur ladite carte numérique (11),
puis générer les paramètres de l'itinéraire de guidage par un algorithme d'exploration aléatoire que comprend ledit module générateur d'itinéraire (14) , sous forme d'un ensemble de points sur une distance de visée choisie entre 30 et 70 mètres, comprenant les coordonnées du véhicule le cap du véhicule, la courbure de la trajectoire d'itinéraire, la vitesse du véhicule, l'accélération du véhicule ;
puis
- B) Fournir lesdits paramètres de l'itinéraire de guidage à un module de gestion d'obstacles (16);
- C) Détecter les obstacles présents sur ledit itinéraire de guidage, et en cas de détection d'au moins un obstacle, fournir les coordonnées dudit obstacle sur ladite carte numérique (11) audit module de gestion d'obstacles (16), de sorte que ce dernier génère des instructions aptes à modifier des paramètres de l'itinéraire de guidage, notamment la vitesse et/ou l'accélération du véhicule de transport ;
- D) Envoyer les données relatives à l'itinéraire de guidage depuis le module de gestion d'obstacles (16) , vers le module de commande du véhicule (17) qui convertit ces données en commandes,
- E) Envoyer les commandes générées par ledit module de commande vers les actionneurs (18) dudit véhicule de transport pour activer ces derniers.

2. Procédé selon la revendication 1, **caractérisé en ce qu'**à l'étape A), le module générateur d'itinéraire (14) génère les paramètres de l'itinéraire de guidage sous forme d'un ensemble de points sur une distance de visée choisie entre 40 et 60 mètres.

3. Procédé selon l'une des revendications 1 à 2, **caractérisé en ce qu'**à l'étape A), la génération des paramètres de l'itinéraire de guidage par le module générateur d'itinéraire (14) comprend une première génération de paramètres par un algorithme d'exploration aléatoire de type « arbre aléatoire à exploration rapide » que comprend ledit module générateur d'itinéraire , puis une optimisation de ces paramètres de première génération par un lissage par approche polynômiale, afin de générer les paramètres de l'itinéraire de guidage sous forme dudit ensemble de points sur une distance de visée choisie entre 30 et 70 mètres, comprenant les coordonnées du véhicule, le cap du véhicule, la courbure de la trajectoire d'itinéraire, la vitesse du véhicule, l'accélération du véhicule.

4. Procédé selon l'une des revendications 1 à 3, **caractérisé en ce que** ledit procédé comprend à l'étape C) : générer une instruction de stopper le véhicule de transport en cas de détection d'obstacle selon une consigne que comprend ledit module de gestion d'obstacles (16).

5. Procédé selon l'une des revendications 1 à 4, **caractérisé en ce que** ledit procédé comprend une étape de donner l'instruction audit véhicule de transport en mode de conduite autonome de s'arrêter à proximité de ladite place de dépose prédéterminée.

6. Procédé selon l'une des revendications 1 à 5, **caractérisé en ce qu'**il comprend au moins l'une des étapes suivantes :
- Activer un mode de conduite autonome dudit véhicule de transport au départ dudit véhicule vers ladite place de dépose prédéterminée, en particulier par une commande à distance,
- Activer un mode de conduite manuelle dudit véhicule de transport une fois arrêté à proximité de ladite place de dépose prédéterminée, en particulier par désactivation du mode de conduite autonome, et en particulier par une commande à distance.

7. Procédé pour transporter au moins un premier conducteur parmi une pluralité de conducteurs, chaque conducteur ayant à déposer un véhicule respectivement sur une place de dépose prédéterminée parmi un lot de places de stationnement, comprenant l'utilisation d'un véhicule de transport apte à naviguer dans un mode autonome, ledit véhicule de transport comprenant une carte numérique (11) préchargée d'au moins un domaine opérationnel délimité pré-établi incluant au moins ladite station de prise en charge, une aire de stationnement comprenant ledit lot de places de stationnement, et au moins des voies de circulation entre la station de prise en charge et ladite aire de stationnement, ledit procédé de transport comprenant les étapes :
- Numériser ledit lot de places de stationnement à partir d'informations fournies par la carte numérique (11) à un module de placement du stationnement (13),
- Attribuer une position numérique à chaque place dudit lot de places de stationnement par ledit module de placement du stationnement (13),
- Assigner une place de dépose à chacun des véhicules à déposer par la pluralité de conducteurs, par ledit module de placement du stationnement (13), de sorte que lesdits conducteurs devront aller chacun à la place de dépose assignée à leur véhicule respectif, dans le temps le plus court dont le véhicule de transport aura besoin pour parcourir la distance requise jusqu'aux dites places de dépose,
- Déterminer une place de dépose constituant, parmi l'ensembles des places de dépose assignées aux véhicules à prendre en charge par ladite pluralité de conducteurs, la première place de dépose d'un premier véhicule à déposer conduit par un premier conducteur, où se rendra le véhicule de transport pour assurer le transport dudit premier conducteur une fois que ledit premier conducteur aura déposé ledit premier véhicule,
et ledit procédé comprenant au moins les étapes selon le procédé pour transporter un conducteur d'un véhicule à déposer suivant l'une des revendications 1 à 6, ledit conducteur étant ledit premier conducteur, et ladite place de dépose prédéterminée étant ladite première place de dépose.

8. Procédé pour transporter au moins un premier conducteur parmi une pluralité de conducteurs selon la revendication 7, **caractérisé en ce qu'**il comprend les étapes :
- passer le véhicule de transport dans un mode de conduite manuelle sous la conduite dudit premier conducteur ayant déposé son véhicule à déposer,
- aller aux places de dépose respectivement assignées aux autres véhicules à déposer, suivant un ordre indiqué par le module de placement du stationnement (13) afin de récupérer les autres conducteurs de la pluralité de conducteurs après qu'ils aient déposé leur véhicule à déposer, puis
- ramener la pluralité de conducteurs à ladite station de prise en charge.

9. Utilisation du procédé pour transporter au moins un premier conducteur parmi une pluralité de conducteurs selon l'une des revendications 7 à 8, pour la gestion du flux logistique de stockage de produits roulants motorisés en sortie d'une usine de fabrication, notamment de véhicules automobiles en sortie d'une chaîne de fabrication, sur des aires de stationnement dans l'enceinte de l'usine de fabrication, des équipes de conducteurs étant en charge d'acheminer lesdits produits vers des places de dépose, ledit procédé étant appliqué à chaque équipe constituant une pluralité de conducteurs.

10. Système de gestion du transport d'au moins un conducteur d'un véhicule, ledit conducteur partant et revenant à un même lieu déterminé tel qu'une station de prise en charge de véhicules à déposer, après que ledit conducteur ait déposé ledit véhicule à une place de dépose prédéterminée parmi un lot de places de dépose, ledit système étant configuré pour mettre en œuvre le procédé pour transporter un conducteur d'un véhicule selon l'une des revendications 1 à 6 ou le procédé pour transporter au moins un premier conducteur parmi une pluralité de conducteur selon l'une des revendications 7 à 8, le système de gestion comprenant :
- au moins un véhicule de transport apte à naviguer dans un mode de conduite autonome et comprenant une carte numérique d'un domaine opérationnel délimité pré-établi ,
- un module de placement du stationnement (13) configuré pour attribuer les coordonnées, sur ladite carte numérique (11), d'un lot de places de dépose, et déterminer ladite place de dépose prédéterminée parmi ledit lot de places de dépose,
- un module de positionnement d'un véhicule (12) configuré pour générer les coordonnées dudit véhicule de transport et le cap du véhicule de transport sur ladite carte numérique (11),
- un module générateur d'itinéraire (14) configuré pour communiquer avec ledit module de placement du stationnement (13) et ledit module de positionnement d'un véhicule (12), et pour générer les paramètres d'un itinéraire de guidage du véhicule de transport vers au moins ladite place de dépose prédéterminée,
- un module de gestion d'obstacles (16) configuré pour communiquer avec ledit module générateur d'itinéraire (14) et un module de détection d'obstacles (15), et avec un module de commande du véhicule (17), pour générer des instructions de modification de paramètres de l'itinéraire de guidage en cas de détection d'obstacle, et envoyer les paramètres de l'itinéraire de guidage et lesdites instructions de modifications de paramètres audit module de commande du véhicule de transport (17), et
ledit module générateur d'itinéraire dudit système de gestion comprenant un algorithme d'exploration aléatoire de type « arbre aléatoire à exploration rapide », et un lissage de forme polynômiale, afin de générer les paramètres de l'itinéraire de guidage sous forme d'un ensemble de points sur une distance de visée donnée.

## Patentansprüche

1. Verfahren zum Transportieren eines Fahrers bis zu einer Übernahmestation von abzustellenden Fahrzeugen, nachdem der Fahrer ein Fahrzeug an einem vorbestimmten Abstellplatz aus einer Partie von Abstellplatzen abgestellt hat, wobei das Verfahren die Verwendung mindestens eines Transportfahrzeugs umfasst, das geeignet ist, in einem autonomen Fahrmodus zu navigieren, wobei das Transportfahrzeug eine vorinstallierte digitale Karte (11) mindestens eines zuvor festgelegten Betriebsgebiets umfasst, das mindestens die Übernahmestation, den vorbestimmten Abstellplatz und mindestens Fahrspuren zwischen der Übernahmestation und dem Abstellplatz beinhaltet, wobei das Verfahren die folgenden Schritte umfasst:
- A) Festlegen einer Führungsroute für das Transportfahrzeug von der Übernahmestation für abzustellende Fahrzeuge zu dem vorbestimmten Abstellplatz, indem einem Routenerzeugungsmodul (14) bereitgestellt werden:
- die Koordinaten des vorbestimmten Abstellplatzes auf der digitalen Karte (11),
- die Koordinaten und der Kurs des Transportfahrzeugs auf der digitalen Karte (11), dann Erzeugen der Parameter der Führungsroute durch einen Erkundungszufallsalgorithmus, den das Routenerzeugungsmodul (14) umfasst, in Form einer Menge von Punkten über eine Sichtdistanz zwischen 30 und 70 Metern, umfassend die Koordinaten des Fahrzeugs, den Kurs des Fahrzeugs, die Krümmung der Routentrajektorie, die Geschwindigkeit des Fahrzeugs, die Beschleunigung des Fahrzeugs;
dann
- B) Bereitstellen der Parameter der Führungsroute für ein Hindernisverwaltungsmodul (16);
- C) Detektieren der auf der Führungsroute vorhandenen Hindernisse und, im Fall der Detektion mindestens eines Hindernisses, Bereitstellen der Koordinaten des Hindernisses auf der digitalen Karte (11) für das Hindernisverwaltungsmodul (16), so dass Letzteres Anweisungen erzeugt, die geeignet sind, Parameter der Führungsroute, insbesondere die Geschwindigkeit und/oder die Beschleunigung des Transportfahrzeugs, zu ändern;
- D) Senden der Daten bezüglich der Führungsroute von dem Hindernisverwaltungsmodul (16) an das Steuermodul des Fahrzeugs (17), das diese Daten in Steuerungen umwandelt;
- E) Senden der von dem Steuermodul erzeugten Steuerungen an die Aktoren (18) des Transportfahrzeugs, um Letztere zu aktivieren.

2. Verfahren nach Anspruch 1, **dadurch gekennzeichnet, dass** das Routenerzeugungsmodul (14) im Schritt A) die Parameter der Führungsroute in Form einer Menge von Punkten über eine ausgewählte Sichtdistanz zwischen 40 und 60 Metern erzeugt.

3. Verfahren nach einem der Ansprüche 1 bis 2, **dadurch gekennzeichnet, dass** das Erzeugen der Parameter der Führungsroute durch das Routenerzeugungsmodul (14) im Schritt A) eine erste Erzeugung von Parametern durch einen Erkundungszufallsalgorithmus vom Typ "Schnellerkundungs-Zufallsbaum" umfasst, den das Routenerzeugungsmodul umfasst, dann eine Optimierung dieser Parameter der ersten Erzeugung durch ein Glätten durch einen polynomialen Ansatz, um die Parameter der Führungsroute in Form der Menge von Punkten über eine ausgewählte Sichtdistanz zwischen 30 und 70 Metern zu erzeugen, umfassend die Koordinaten des Fahrzeugs, den Kurs des Fahrzeugs, die Krümmung der Routentrajektorie, die Geschwindigkeit des Fahrzeugs, die Beschleunigung des Fahrzeugs.

4. Verfahren nach einem der Ansprüche 1 bis 3, **dadurch gekennzeichnet, dass** das Verfahren im Schritt C) umfasst:
Erzeugen einer Anweisung zum Stoppen des Transportfahrzeugs im Fall einer Hindernisdetektion gemäß einer Vorschrift, die das Hindernisverwaltungsmodul (16) umfasst.

5. Verfahren nach einem der Ansprüche 1 bis 4, **dadurch gekennzeichnet, dass** das Verfahren einen Schritt umfasst, dem Transportfahrzeug im autonomen Fahrmodus die Anweisung zu erteilen, in der Nähe des vorbestimmten Abstellplatzes anzuhalten.

6. Verfahren nach einem der Ansprüche 1 bis 5, **dadurch gekennzeichnet, dass** es mindestens einen der folgenden Schritte umfasst:
- Aktivieren eines autonomen Fahrmodus des Transportfahrzeugs bei der Abfahrt des Fahrzeugs zu dem vorbestimmten Abstellplatz, insbesondere durch eine Fernsteuerung,
- Aktivieren eines manuellen Fahrmodus des Transportfahrzeugs, sobald es in der Nähe des vorbestimmten Abstellplatzes angehalten hat, insbesondere durch Deaktivieren des autonomen Fahrmodus und insbesondere durch eine Fernsteuerung.

7. Verfahren zum Transportieren mindestens eines ersten Fahrers aus einer Vielzahl von Fahrern, wobei jeder Fahrer ein Fahrzeug auf einem vorbestimmten Abstellplatz aus einer Partie von Parkplätzen abzustellen hat, umfassend die Verwendung eines Transportfahrzeugs, das geeignet ist, in einem autonomen Modus zu navigieren, wobei das Transportfahrzeug eine vorinstallierte digitale Karte (11) mindestens eines zuvor festgelegten Betriebsgebiet umfasst, die mindestens die Übernahmestation, eine Parkfläche, die die vorbestimmte Partie von Parkplätzen umfasst, und mindestens Fahrspuren zwischen der Übernahmestation und der Parkfläche beinhaltet, wobei das Transportverfahren die folgenden Schritte umfasst:
- Nummerieren der Partie von Parkplätzen ausgehend von Informationen, die einem Parkplatzierungsmodul (13) von der digitalen Karte (11) bereitgestellt werden,
- Zuordnen einer numerischen Position zu jedem Platz der Partie von Parkplätzen durch das Parkplatzierungsmodul (13),
- Zuweisen eines Abstellplatzes zu jedem der durch die Vielzahl von Fahrern abzustellenden Fahrzeuge durch das Parkplatzierungsmodul (13), so dass die Fahrer jeweils zu dem ihrem jeweiligen Fahrzeug zugewiesenen Abstellplatz fahren müssen, innerhalb der kürzesten Zeit, die das Transportfahrzeug benötigt, um die erforderliche Distanz bis zu den Abstellplätzen zurückzulegen,
- Bestimmen eines Ablageplatzes, der aus der Menge der Abstellplätze, die den von der Vielzahl von Fahrern zu übernehmenden Fahrzeugen zugewiesen sind, den ersten Abstellplatz eines von einem ersten Fahrer gefahrenen ersten abzustellenden Fahrzeugs darstellt, zu dem sich das Transportfahrzeug begeben wird, um den Transport des ersten Fahrers zu gewährleisten, sobald der erste Fahrer das erste Fahrzeug abgestellt haben wird,
und wobei das Verfahren mindestens die Schritte nach dem Verfahren zum Transportieren eines Fahrers eines abzustellenden Fahrzeugs nach einem der Ansprüche 1 bis 6 umfasst, wobei der Fahrer der erste Fahrer ist und wobei der vorbestimmte Abstellplatz der erste Abstellplatz ist.

8. Verfahren zum Transportieren mindestens eines ersten Fahrers aus einer Vielzahl von Fahrern nach Anspruch 7, **dadurch gekennzeichnet, dass** es die folgenden Schritte umfasst:
- Versetzen des Transportfahrzeugs in einen manuellen Fahrmodus unter der Führung des ersten Fahrers, der sein abzustellendes Fahrzeug abgestellt hat,
- Fahren zu den Abstellplätzen, die den anderen abzustellenden Fahrzeugen jeweils zugewiesen sind, in einer von dem Parkplatzierungsmodul (13) angegebenen Reihenfolge, um die anderen Fahrer der Vielzahl von Fahrern abzuholen, nachdem sie ihr abzustellendes Fahrzeug abgestellt haben, dann
- Zurückbringen der Vielzahl von Fahrern zu der Übernahmestation.

9. Verwendung des Verfahrens zum Transportieren mindestens eines ersten Fahrers aus einer Vielzahl von Fahrern nach einem der Ansprüche 7 bis 8 zur Verwaltung des Lagerlogistikflusses von motorisierten rollenden Produkten im Ausgang eines Herstellungswerks, insbesondere von Kraftfahrzeugen im Ausgang einer Fertigungslinie, auf Parkflächen auf dem Gelände des Herstellungswerks, wobei Teams von Fahrern dafür verantwortlich sind, die Produkte zu Abstellplätzen zu bringen, wobei das Verfahren auf jedes Team angewendet wird, das eine Vielzahl von Fahrern darstellt.

10. System zur Verwaltung des Transports mindestens eines Fahrers eines Fahrzeugs, wobei der Fahrer an einem selben bestimmten Ort wie einer Übernahmestation von abzustellenden Fahrzeugen abfährt und wieder ankommt, nachdem der Fahrer das Fahrzeug an einem vorbestimmten Abstellplatz aus einer Partie von Abstellplätzen abgestellt hat, wobei das System dazu ausgestaltet ist, das Verfahren zum Transportieren eines Fahrers eines Fahrzeugs nach einem der Ansprüche 1 bis 6 oder das Verfahren zum Transportieren mindestens eines ersten Fahrers aus einer Vielzahl von Fahrern nach einem der Ansprüche 7 bis 8 durchzuführen, wobei das System zur Verwaltung umfasst:
- mindestens ein Transportfahrzeug, das geeignet ist, in einem autonomen Fahrmodus zu navigieren, und eine digitale Karte eines zuvor festgelegten abgegrenzten Betriebsbereichs umfasst;
- ein Parkplatzierungsmodul (13), das dazu ausgestaltet ist, die Koordinaten, auf der digitalen Karte (11), einer Partie von Abstellplätzen zuzuweisen und den vorbestimmten Abstellplatz aus der Partie von Abstellplätzen zu bestimmen,
- ein Positionierungsmodul eines Fahrzeugs (12), das dazu ausgestaltet ist, die Koordinaten des Transportfahrzeugs und den Kurs des Transportfahrzeugs auf der digitalen Karte (11) zu erzeugen,
- ein Routenerzeugungsmodul (14), das dazu ausgestaltet ist, mit dem Parkplatzierungsmodul (13) und dem Positionierungsmodul eines Fahrzeugs (12) zu kommunizieren und die Parameter einer Führungsroute des Transportfahrzeugs zu mindestens dem vorbestimmten Abstellplatz zu erzeugen,
- ein Hindernisverwaltungsmodul (16), das dazu ausgestaltet ist, mit dem Routenerzeugungsmodul (14) und einem Hindernisdetektionsmodul (15) und mit einem Steuermodul des Fahrzeugs (17) zu kommunizieren, um Anweisungen zur Änderung von Parametern der Führungsroute im Fall einer Hindernisdetektion zu erzeugen und die Parameter der Führungsroute und die Anweisungen zur Änderung von Parametern an das Steuermodul des Transportfahrzeugs (17) zu senden, und
wobei das Routenerzeugungsmodul des Verwaltungssystems einen Erkundungszufallsalgorithmus vom Typ "Schnellerkundungs-Zufallsbaum" und eine polynomiale Glättung umfasst, um die Parameter der Führungsroute in Form einer Menge von Punkten über eine gegebene Sichtdistanz zu erzeugen.

## Claims

1. Method for transporting a driver to a pick-up station for vehicles that are to be dropped off, after said driver has dropped off a vehicle at a predetermined drop-off place among a group of drop-off places, said method comprising using at least one transport vehicle capable of navigating in an autonomous driving mode, said transport vehicle comprising a preloaded digital map (11) of at least one pre-established operational area including at least said pick-up station, said predetermined drop-off place and at least traffic lanes between the pick-up station and said drop-off place, said method comprising the following steps:
- A) establishing a route for guiding the transport vehicle from the pick-up station for vehicles that are to be dropped off, to the predetermined drop-off place by supplying a route generator module (14) with:
- the coordinates, on said digital map (11), of the predetermined drop-off place,
- the coordinates and the course of said transport vehicle on said digital map (11), then generating the parameters of the guidance route by means of a random exploration algorithm comprised by said route generator module (14), in the form of a set of points over a selected viewing distance of between 30 and 70 metres, comprising the coordinates of the vehicle, the course of the vehicle, the curvature of the route trajectory, the speed of the vehicle, the acceleration of the vehicle; then
- B) supplying said parameters of the guidance route to an obstacle management module (16);
- C) detecting obstacles present on said guidance route, and, in the event that at least one obstacle is detected, supplying the coordinates of said obstacle on said digital map (11) to said obstacle management module (16), so that the latter generates instructions capable of modifying parameters of the guidance route, in particular the speed and/or the acceleration of the transport vehicle;
- D) sending data relating to the guidance route from the obstacle management module (16) to the module (17) for controlling the vehicle, which module converts these data into commands,
- E) sending the commands generated by said control module to the actuators (18) of said transport vehicle in order to activate them.

2. Method according to Claim 1, **characterized in that**, in step A), the route generator module (14) generates the parameters of the guidance route in the form of a set of points over a selected viewing distance of between 40 and 60 metres.

3. Method according to either of Claims 1 and 2, **characterized in that**, in step A), the generation of the parameters of the guidance route by means of the route generator module (14) comprises a first generation of parameters by a random exploration algorithm of "rapidly exploring random tree" type comprised by said route generator module, then an optimization of these first generation parameters by smoothing by a polynomial approach, in order to generate the parameters of the guidance route in the form of said set of points over a selected viewing distance of between 30 and 70 metres, comprising the coordinates of the vehicle, the course of the vehicle, the curvature of the route trajectory, the speed of the vehicle, the acceleration of the vehicle.

4. Method according to one of Claims 1 to 3, **characterized in that** said method comprises, in step C): generating an instruction to stop the transport vehicle in the event that an obstacle is detected according to a setpoint comprised by said obstacle management module (16).

5. Method according to one of Claims 1 to 4, **characterized in that** said method comprises a step of instructing said transport vehicle in autonomous driving mode to stop near said predetermined drop-off place.

6. Method according to one of Claims 1 to 5, **characterized in that** it comprises at least one of the following steps:
- activating an autonomous driving mode of said transport vehicle upon departure of said vehicle to said predetermined drop-off place, in particular by remote control,
- activating a manual driving mode of said transport vehicle once stopped near said predetermined drop-off place, in particular by deactivating the autonomous driving mode, and in particular by remote control.

7. Method for transporting at least a first driver among a plurality of drivers, each driver having to drop off a vehicle, respectively, at a predetermined drop-off place among a group of parking places, comprising using a transport vehicle capable of navigating in an autonomous mode, said transport vehicle comprising a preloaded digital map (11) of at least one pre-established delimited operational area including at least said pick-up station, a parking area comprising said group of parking places, and at least traffic lanes between the pick-up station and said parking area, said transport method comprising the steps of:
- digitizing said group of parking places on the basis of information supplied to a parking placement module (13) by the digital map (11),
- attributing a digital position to each place of said group of parking places by means of said parking placement module (13),
- assigning a drop-off place to each of the vehicles that is to be dropped off by the plurality of drivers, by means of said parking placement module (13), so that said drivers will each have to go to the drop-off place assigned to their respective vehicle, in the shortest time over which the transport vehicle will need to travel the required distance to said drop-off places,
- determining a drop-off place constituting, among all the drop-off places assigned to the vehicles that are to be picked up by said plurality of drivers, the first drop-off place of a first vehicle that is to be dropped off and that is driven by a first driver, where the transport vehicle will return to in order to ensure the transport of said first driver once said first driver has dropped off said first vehicle,
and said method comprising at least the steps according to the method for transporting a driver of a vehicle that is to be dropped off according to one of Claims 1 to 6, said driver being said first driver, and said predetermined drop-off place being said first drop-off place.

8. Method for transporting at least a first driver among a plurality of drivers according to Claim 7, **characterized in that** it comprises the steps of:
- switching the transport vehicle to a manual driving mode under the control of said first driver who has dropped off their vehicle that is to be dropped off,
- going to the drop-off places respectively assigned to the other vehicles that are to be dropped off, according to an order indicated by the parking placement module (13) in order to pick up the other drivers of the plurality of drivers after they have dropped off their vehicle that is to be dropped off, then
- bringing the plurality of drivers back to said pick-up station.

9. Use of the method for transporting at least a first driver among a plurality of drivers according to either of Claims 7 and 8, for managing the logistics flow of storing motorized rolling products leaving a manufacturing plant, in particular motor vehicles leaving a manufacturing line, on parking areas within the manufacturing plant, teams of drivers being in charge of conveying said products to drop-off places, said method being applied to each team constituting a plurality of drivers.

10. Management system for transporting at least one driver of a vehicle, said driver leaving and returning to the same determined location such as a pick-up station for vehicles that are to be dropped off, after said driver has dropped off said vehicle at a predetermined drop-off place among a group of drop-off places, said system being configured to perform the method for transporting a driver of a vehicle according to one of Claims 1 to 6 or the method for transporting at least a first driver among a plurality of drivers according to either of Claims 7 and 8, the management system comprising:
- at least one transport vehicle capable of navigating in an autonomous driving mode and comprising a digital map of a pre-established delimited operational area,
- a parking placement module (13) configured to attribute the coordinates, on said digital map (11), of a group of drop-off places, and to determine said predetermined drop-off place from said group of drop-off places,
- a module (12) for positioning a vehicle, configured to generate the coordinates of said transport vehicle and the course of the transport vehicle on said digital map (11),
- a route generator module (14) configured to communicate with said parking placement module (13) and said module (12) for positioning a vehicle, and to generate parameters of a route for guiding the transport vehicle to at least said predetermined drop-off place,
- an obstacle management module (16) configured to communicate with said route generator module (14) and an obstacle detection module (15), and with a module (17) for controlling the vehicle, in order to generate instructions for modifying parameters of the guidance route in the event that an obstacle is detected, and send the parameters of the guidance route and said instructions for modifying parameters to said module (17) for controlling the transport vehicle, and
said route generator module of said management system comprising a random exploration algorithm of "rapidly exploring random tree" type, and polynomial shape smoothing, in order to generate the parameters of the guidance route in the form of a set of points over a given viewing distance.
